# EUROPÄISCHE PATENTSCHRIFT

(11) **EP 2 696 362 B1**
(45) Veröffentlichungstag und Bekanntmachung des Hinweises auf die Patenterteilung: **22.03.2017**
(21) Anmeldenummer: 13180089.8
(22) Anmeldetag: 12.08.2013
(51) Int. Cl.: H01H 47/32, H01H 47/04, H01F 7/18

(54) **Steuervorrichtung für ein Schaltgerät mit getrennter Anzug- und Haltespule**
Control device for a switching device with separate retraction and holding coil
Dispositif de commande pour un appareil de commutation doté d'une bobine d'attraction et de maintien séparée

(30) Priorität: 10.08.2012 DE 102012107371
(43) Veröffentlichungstag der Anmeldung: 12.02.2014
(73) Patentinhaber: Eaton Electrical IP GmbH & Co. KG, 12529 Schönefeld (DE)
(72) Erfinder: Meid, Wolfgang, 56218 Mülheim-Kärlich (DE)
(74) Vertreter: Eaton IP Group EMEA

(56) Entgegenhaltungen:
- EP-A1- 0 567 935
- DE-A1-102007 026 169
- DE-T2- 69 400 172

## Beschreibung

Die Erfindung betrifft eine Steuervorrichtung für ein Schaltgerät mit getrennter Anzug- und Haltespule, insbesondere ein Schütz, sowie ein Schaltgerät mit einer derartigen Steuervorrichtung.

DE102007026169 A1 offenbart eine Steuervorrichtung für ein Schaltgerät mit getrennter Anzug- und Haltespule gemäß dem Oberbegriff des Anspruchs 1.

In Schaltgeräten wie Schützen für große Leistungen wird das Magnetfeld, mit dem der Schaltantrieb angetrieben wird, häufig direkt aus der Eingangsquelle des Schaltgeräts generiert. Wird das Schaltgerät beispielsweise mit Wechselspannung gespeist, wird über eine Gleichrichterschaltung eine Gleichspannung erzeugt, die eine Steuervorrichtung des Schaltgeräts speist. Aus dieser Gleichspannung erzeugt die Steuervorrichtung eine Puls-Weiten-Modulierte (PWM) Spannung, mit der eine Spule des Schaltantriebs gespeist wird. Bei Schaltgeräten wie Schützen für große Leistungen wird bei einem Schaltvorgang zunächst der Anzugstromkreis aktiviert, der die Spule des Schaltantriebs mit einer ersten PWM-Spannung für den Anzugvorgang des Schaltantriebs versorgt. Sobald der Anzugsvorgang beendet ist, wird die erste PWM-Spannung zum Versorgen der Anzugspule abrupt abgeschaltet und eine zweite PWM-Spannung für den Haltevorgang des Schaltantriebs im Haltestromkreis erzeugt, die im Haltebetrieb des Schaltgerätes die Schaltantriebs-Spule versorgt.

Aufgabe der vorliegenden Erfindung ist es nun, eine verbesserte Steuervorrichtung für ein Schaltgerät mit getrennter Anzug- und Haltespule und ein verbessertes Schaltgerät vorzuschlagen.

Diese Aufgabe wird durch die Gegenstände der unabhängigen Ansprüche gelöst. Weitere Ausgestaltungen der Erfindung sind Gegenstand der abhängigen Ansprüche.

Ein der vorliegenden Erfindung zugrunde liegender Gedanke besteht darin, eine Gleichspannungsversorgung für eine Haltespule eines Schaltgeräts und eine Steuerelektronik des Schaltgeräts mit gemeinsamem Bezugspotential für die Haltespule und die Steuerelektronik vorzusehen. Dadurch kann zum einen die Versorgung der Steuerelektronik und Haltespule einfacher realisiert werden, da die Haltespule im Haltebetrieb mit einer Gleichspannung anstatt mit einer PWM-Spannung versorgt wird. Zum anderen kann durch die Gleichspannungsversorgung der Haltespule im Haltebetrieb das EMV (Elektromagnetische Verträglichkeit)-Verhalten eines Schaltgeräts wesentlich verbessert werden, da wesentlich weniger insbesondere hochfrequente elektromagnetische Störungen erzeugt werden, die typischerweise beim Betrieb mit einer PWM-Spannung entstehen. Ein weiterer Vorteil ist bei der Erfindung auch darin zu sehen, dass eine einzelne Haltespule für verschiedene Spannungsvarianten eines Schaltgeräts eingesetzt werden kann, da die Haltespule im Haltebetrieb unabhängig von der Eingangsspannung des Schaltgeräts mit der gleichen durch die Gleichstromversorgung vorgegebene Gleichspannung versorgt wird. Weiterhin ermöglicht die Erfindung auch eine Reduzierung der zur Implementierung benötigten Bauelemente, da die Haltespule auf dem gleichen Bezugspotential wie die Steuerelektronik liegt und daher keine unterschiedlichen Bezugspotentiale im Schaltgerät vorgesehen sein müssen, die meistens eine aufwendigere Schaltungstechnik bedingen. Schließlich bleibt das EMV-Verhalten durch die Erfindung über verschiedene Baugrößen eines Schaltgeräts in etwa gleich, da die gleiche Haltespule für die verschiedenen Baugrößen eingesetzt werden kann.

Eine Ausführungsform der Erfindung betrifft nun eine Steuervorrichtung für ein Schaltgerät mit getrennter Anzug- und Haltespule mit einer Steuerelektronik zum Steuern der Stromversorgung der Anzug- und der Haltespule und einer Gleichspannungsversorgungseinheit für die Haltespule und die Steuerelektronik mit gemeinsamem Bezugspotential für die Haltespule und die Steuerelektronik. Die Steuervorrichtung kann beispielsweise als Modul ausgebildet sein, das universell in Schaltgeräten verschiedener Baugrößen und Eingangsspannungsbereiche eingesetzt werden kann.

Es ist ferner ein der Gleichspannungsversorgungseinheit vorgeschalteter Gleichspannungswandler vorgesehen, der zum Erzeugen einer vorgegebenen Gleichspannung aus einer Ausgangsspannung eines Gleichrichters in einem vorgegebenen Spannungsbereich ausgebildet ist. Der Gleichspannungswandler kann beispielsweise für einen großen Eingangsspannungsbereich ausgelegt sein und ausgebildet sein, aus Spannungen in diesem Eingangsspannungsbereich die vorgegebene Gleichspannung zu erzeugen, mit der die Gleichspannungsversorgungseinheit gespeist wird, welche die Haltespule und die Steuerelektronik versorgt.

Die Gleichspannungsversorgungseinheit kann ausgebildet sein, eine erste Gleichspannung zur Versorgung der Haltespule und eine zweite Gleichspannung zur Versorgung der Steuerelektronik zu erzeugen, wobei die erste und zweite Gleichspannung unterschiedlich sind. Die erste Gleichspannung kann beispielsweise derart bemessen sein, dass sie in der Haltespule ein magnetisches Feld erzeugt, das ausreicht, um im Haltebetrieb den Schaltantrieb eines Schaltgeräts in einer Position zu halten, in der die Schaltkontakte beispielsweise geschlossen sind. Die zweite Gleichspannung kann dagegen so bemessen sein, dass sie zur Spannungsversorgung der Steuerelektronik ausreicht.

Die Steuerelektronik kann ausgebildet sein, während eines Haltevorgangs des Schaltgeräts die Haltespule mit einem weitgehend konstanten Gleichstrom zu versorgen. Wie bereits oben erläutert, kann dadurch das EMV-Verhalten eines Schaltgeräts verbessert werden, da keine Ein- und Ausschaltvorgänge in der Haltespule im Vergleich zu einem Betrieb mit einer PWM-Spannung stattfinden, die elektromagnetische Störungen erzeugen können.

Die Steuerelektronik kann auch ausgebildet sein, während eines Anzugvorgangs des Schaltgeräts die Versorgung der Anzugspule zu steuern. Beispielsweise kann die Steuerelektronik ein Steuersignal für ein zwischen die Anzugspule und ein Bezugspotential geschaltetes Schaltelement während des Anzugvorgangs erzeugen, das bewirkt, dass durch die Anzugspule ein Puls-Weiten-Modulierter Strom fließt bzw. die Anzugspule mit einer PWM-Spannung versorgt wird. Die Steuerelektronik kann nach Beendigung des Anzugvorgangs über das Steuersignal das Schaltelement abschalten, so dass kein Strom mehr durch die Anzugspule fließt, und über ein weiteres Steuersignal ein zwischen das Bezugspotential der Steuerelektronik und der Haltespule geschaltetes Schaltelement aktivieren, so dass durch die Haltespule ein von der Gleichspannungsversorgung getriebener Gleichstrom zum Aufbauen eines magnetischen Feldes zum Halten eines Zustands eines Schaltantriebs des Schaltgeräts fließt.

Außerdem kann die Steuerelektronik ausgebildet sein, eine Schnellabschaltung der Gleichspannungsversorgung der Haltespule auszuführen. Insbesondere kann die Schnellabschaltung so erfolgen, dass das Magnetfeld der Haltespule möglichst schnell abgebaut wird, um einen Wechsel des Schaltantriebs des Schaltgeräts in einen anderen Zustand zu beschleunigen.

Eine weitere Ausführungsform der Erfindung betrifft ein Schaltgerät, insbesondere Schütz, mit einem Schaltantrieb, der eine Anzugspule und eine von dieser getrennte Haltespule aufweist, einer Steuervorrichtung nach der Erfindung und wie hierin beschrieben zum Steuern der Stromversorgung der Anzug- und der Haltespule, und einem Gleichrichter zum Erzeugen einer gleichgerichteten Ausgangsspannung aus einer Wechselspannung in einem vorgegebenen Eingangsspannungsbereich, wobei die Ausgangsspannung der Anzugspule und der Steuervorrichtung zur Versorgung zugeführt ist.

Die Steuervorrichtung kann einen Mikroprozessor oder Mikrokontroller aufweisen, der durch ein in einem Speicher abgelegtes Programm derart konfiguriert ist, dass während eines Anzugvorgangs des Schaltantriebs die Anzugspule mit einer Puls-Weiten-Modulierten Spannung und daraus resultierendem Strom versorgt wird und während eines Haltevorgangs des Schaltantriebs die Haltespule mit einem weitgehend konstanten Gleichstrom versorgt wird.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Blockschaltbild eines Ausführungsbeispiels einer Steuervorrichtung für ein Schaltgerät mit getrennter Anzug- und Haltespule gemäß der Ereindung: und
Fig. 2 ein Blockschaltbild eines Ausführungsbeispiels der Elektronik eines Schützes gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

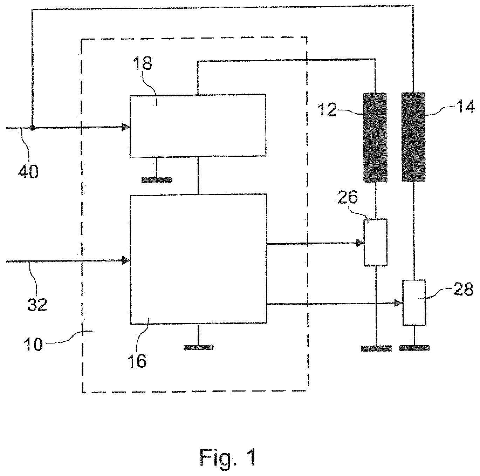

In Fig. 1 ist eine Schaltung mit einer Steuervorrichtung 10 gemäß der Erfindung zur Steuerung der Versorgung einer Haltespule 12 und einer von der Haltespule 12 getrennte Anzugspule 14 eines elektromagnetischen Antriebs eines Schaltgeräts gezeigt. Die Vorrichtung 10 weist eine Steuerelektronik 16 und eine Gleichspannungsversorgungseinheit 18 auf. Eingangsseitig werden der Vorrichtung 10 über einen Gleichspannungseingang 40 eine Gleichspannung und über einen oder mehrere Steuereingänge 32 Steuersignale zugeführt. Die dem Eingang 40 zugeführte Gleichspannung dient auch zur Versorgung der Anzugspule 14 des elektromagnetischen Schaltgerät-Antriebs. Ausgangsseitig erzeugt die Steuervorrichtung 10 eine erste Gleichspannung zur Versorgung der Haltespule 12 und Steuersignale zum Ansteuern eines ersten und eines zweiten Schaltelements 26 bzw. 28, die zwischen die Halte- bzw. Anzugspule 12 bzw. 14 und ein Bezugspotential geschaltet sind.

Aus der am Eingang 40 der Steuervorrichtung 10 anliegenden Gleichspannung erzeugt die Gleichspannungsversorgungseinheit 18 die erste Gleichspannung, die an der Haltespule 12 anliegt, und eine zweite Gleichspannung, die zur Versorgung der Steuerelektronik 16 dient. Die erste und/oder zweite Gleichspannung können geregelte Gleichspannungen sein. Die erste Gleichspannung kann beispielsweise 14 Volt und die zweite Gleichspannung kann beispielsweise 3 Volt betragen. Mit einem über den oder die Steuereingänge 32 zugeführten Schaltsignal kann die Steuerelektronik 16 getriggert werden, einen insbesondere programmgesteuerten Schaltvorgang zu initiieren. Hierzu legt die Steuerelektronik 16 zunächst während eines Anzugvorgangs des Schaltantriebs, in dem Schaltkontakte von einer ersten Position in eine zweite Position bewegt werden sollen, ein PWM-Steuersignal an das zweite Schaltelement 28 an, so dass durch die Anzugspule 14 ein Strom fließt, der so bemessen ist, dass der Schaltantrieb bewegt werden kann. Am Ende des Anzugvorgangs schaltet die Steuerelektronik 16 das zweite Schaltelement 28 ab, so dass kein Strom mehr durch die Anzugspule 14 fließt, und schaltet das erste Schaltelement 26 ein, so dass durch die Haltespule 12 ein etwa konstanter Gleichstrom während der Dauer des Haltevorgangs fließt. Der Gleichstrom ist hierbei so bemessen, dass der Schaltantrieb in der zweiten Position der Kontakteinheiten des Schaltantriebs verbleibt. Über das erste Schaltelement 26 wird ein Anschluss der Haltespule 12 auf das Bezugspotential der Steuerelektronik gelegt.

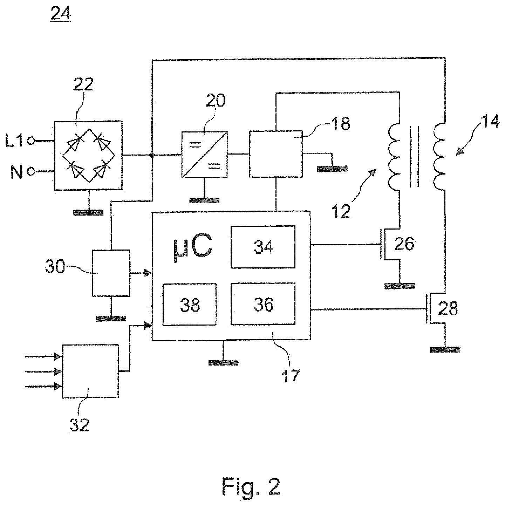

Fig. 2 zeigt die Elektronik 24 eines Schützes, die direkt an Wechselspannungsleitungen L1 und N angeschlossen und über diese versorgt wird. Ein Gleichrichter 22 erzeugt hierzu aus einer Wechselspannung in einem vorgegebenen Betriebsspannungsbereich des Schützes eine ungeregelte Gleichspannung, die parallel einer Anzugspule 14 des Schützantriebs, einem Gleichspannungswandler 20 und einer Spannungsmesseinheit 30 zugeführt wird.

Aus der zugeführten ungeregelten Gleichspannung erzeugt der Gleichspannungswandler 20 eine vorgegebene Gleichspannung, die der Gleichspannungsversorgungseinheit 18 der Steuervorrichtung der Schützelektronik zugeführt wird. Aus der vorgegebenen Gleichspannung erzeugt die Gleichspannungsversorgungseinheit 18 eine erste Gleichspannung zum Speisen einer Haltespule 12 des Schützantriebs und eine zweite Gleichspannung zum Versorgen eines Mikrokontrollers 17 der Schützelektronik, der Teil der Steuerelektronik ist, die ferner den Gleichspannungswandler 20 und zwei FETs (Feldeffekttransistor) 26 und 28 zum Steuern des Stromflusses durch die Anzug- und Haltespule 14 bzw. 12 aufweisen kann. Die zweite Gleichspannung ist hierbei niedriger als die erste Gleichspannung und geregelt.

Der Mikrokontroller 17 erzeugt Steuersignale zum Ansteuern eines ersten und eines zweiten FETs (Feldeffekttransistor) 26 bzw. 28. Der als Schaltelement eingesetzte erste FET 26 ist zwischen das Bezugspotential des Mikrokontrollers 17 und die Haltespule 12 geschaltet. Der ebenfalls als Schaltelement eingesetzte zweite FET 28 ist zwischen ein Bezugspotential und die Anzugspule geschaltet.

Der Mikrokontroller 17 weist folgende Komponenten auf: eine Schnellabschalteinheit 34 zum schnellen Abschalten des durch die Haltespule 12 erzeugten Magnetfelds; eine PWM-Signalerzeugungseinheit 36 zum Erzeugen eines PWM-Steuersignals zum Ansteuern des zweiten FETs 28; eine Temperaturkompensationseinheit 38 zum Kompensieren einer Erwärmung der Anzugspule 14 und einer durch die Erwärmung bedingten Reduzierung des Stromes durch die Anzugspule 14, was die Funktionsweise des Schützes beeinträchtigen könnte.

Die Schützelektronik 24 weist außerdem folgende Steuereingänge 32 auf: einen leistungsarmen Steuereingang für Steuersignale mit geringem Spannungshub und/oder geringem Eingangsstrom; einen Eingang für Steuersignale von einer SPS (SpeicherProgrammierbaren-Steuerung); weitere spezielle Steuereingänge wie besonders empfindliche Eingänge für Fernsteuerungssignale etc.

Im Folgenden werden der Betrieb des Schützes und die Funktionsabläufe in der Schützelektronik 24 erläutert. Beim Verbinden der Schützelektronik 24 mit den Wechselspannungsleitungen L1 und N wird aus der an diesen Leitungen anliegenden Wechselspannung, die sich in einem vorgegebenen Betriebsspannungsbereich der Schützelektronik 24 befinden muss, über den Gleichrichter 22, den Gleichspannungswandler 20 und die Gleichspannungsversorgungseinheit 18 eine zweite Gleichspannung für den Betrieb des Mikrokontrollers 17 erzeugt. Der Mikrokontroller 17 startet daraufhin ein in seinem internen oder in einem externen Speicher abgelegtes Betriebsprogramm des Schützes (Schütz-Firmware), das den Mikrokontroller 17 so konfiguriert, dass er sich in einem Bereitschaftsmodus befindet, in dem er über Steuereingänge 32 eingehende Steuersignale verarbeitet. Detektiert der Mikrokontroller 17 beispielsweise an einem der Steuereingänge 32 ein anliegendes Schaltsignal, d.h. ein Steuersignal zum Schalten des Schützes, wird vom Mikrokontroller gemäß dem Schütz-Betriebsprogramm zunächst ein Anzugvorgang des Schütz-Schaltantriebs initiiert, bei dem Schaltkontakte des Schützes von einer ersten, beispielsweise offenen Position in eine zweite, beispielsweise geschlossene Position gebracht werden. Die minimale Zeit des Bereitschaftsmodus des Schützes kann beispielsweise einige wenige Millisekunden betragen, insbesondere wenn das Schütz konventionell betrieben wird. Es kann jedoch auch vorgesehen sein, dass das Schütz bereits mit Anlegen der Versorgungsspannung einschaltet. Während des Anzugvorgangs steuert der Mikrokontroller 17 die PWM-Signalerzeugungseinheit 36 derart an, dass diese ein PWM-Steuersignal erzeugt, dass über den zweiten FET 28 einen Strom durch die Anzugspule 14 erzeugt, die wiederum ein entsprechendes Magnetfeld erzeugt, das ein Bewegen der Schaltkontakte bewirkt. Sobald der Anzugvorgang abgeschlossen ist, was in der Regel der Fall ist, wenn sich die Schaltkontakte in der zweiten Position befinden, schaltet der Mikrokontroller 17 die PWM-Signalerzeugungseinheit 36 ab, so dass der zweite FET 28 geöffnet wird und kein Strom mehr durch die Anzugspule fließt. Weiterhin steuert der Mikrokontroller 17 die Schnellabschalteinheit 34 so an, dass diese den ersten FET 26 durchschaltet und die erste, von der Gleichspannungsversorgungseinheit 18 erzeugte und an der Haltespule 12 anliegende Gleichspannung einen nahezu konstanten Gleichstrom durch die Haltespule 12 treiben kann. Hierdurch erzeugt die Haltespule 12 ein etwa konstantes Magnetfeld, das die Schaltkontakte des Schützes in der zweiten Position hält. Wenn der Mikrokontroller 17 an einem der Steuereingänge 32 ein Abschaltsignal detektiert, steuert er die Schnellabschalteinheit 34 derart an, dass diese den ersten FET 26 ausschaltet, indem seine Laststrecke hochohmig wird, und kein Gleichstrom mehr über die Haltespule 12 fliessen kann. Das Magnetfeld der Haltespule 12 wird daraufhin abgebaut, so dass die Schaltkontakte vom Schaltantrieb wieder in die erste Position bewegt werden und beispielsweise offen sind.

Die Spannungsmesseinheit 30 dient vor allem zur Überwachung der Ausgangsspannung des Gleichrichters 22 und kann bei einem Unter- oder Überschreiten der Grenzen des vorgegebenen Betriebsspannungsbereichs der Schützelektronik durch die Ausgangsspannung ein entsprechenden Signal an den Mikrokontroller 17 abgegeben, der dann eine entsprechende Aktion initiieren kann, wie beispielsweise die Schützelektronik zu deaktivieren, um Beschädigung aufgrund einer Überspannung zu vermeiden, oder einen solchen Zustand signalisieren, beispielsweise über eine angeschlossenen Signalleuchte, so dass schnell erkannt werden kann, wenn beispielsweise das Schütz an einer unzulässigen Wechselspannung betrieben wird. Die Spannungsmesseinheit 30 kann dem Mikrokontroller alternativ oder zusätzlich auch signalisieren, wenn sich die Ausgangsspannung des Gleichrichters innerhalb des vorgegebenen Betriebsspannungsbereichs befindet.

Die Temperaturkompensationseinheit 38 dient der Anzugsstromregelung. Da sich im laufenden Betrieb die Anzugsspulentemperatur erhöhen kann, kann sich auch der ohmsche Widerstand der Anzugsspule 14 erhöhen. Mit Hilfe der Temperaturkompensationseinheit 38 kann nun die PWM-Signalerzeugungseinheit 36 derart angesteuert werden, dass sie das PWM-Steuersignal für den FET 28 entsprechend geändert, so dass der durch die Anzugspule 14 fließende Strom unabhängig von der Spulentemperatur etwa konstant bleibt.

Mit der vorliegenden Erfindung kann die Spannungsversorgung der Steuerelektronik und einer Haltespule eines Schaltgeräts wie eines Schützes einfacher realisiert werden. Ferner kann eine Schnellabschaltung der Haltespule einfacher implementiert werden. Durch die Erfindung kann das EMV-Verhalten eines Schaltgeräts verbessert werden, insbesondere kann das EMV-Verhalten über verschiedene Baugrößen eines Schaltgeräts mit unterschiedlichem Eingangsspannungsbereich nahezu konstant gehalten werden. Mit der Erfindung kann eine Haltespule für verschiedene Spannungsvarianten eines Schaltgeräts eingesetzt werden. Schließlich kann durch die Erfindung der Bauteilebedarf in einem Schaltgerät verringert werden.

### Bezugszeichen

- 10: Schaltgerät-Steuervorrichtung
- 12: Haltespule
- 14: Anzugspule
- 16: Steuerelektronik
- 17: Mikrokontroller
- 18: Gleichspannungsversorgungseinheit
- 20: Gleichspannungswandler
- 22: Gleichrichter
- 24: Schützelektronik
- 26: erstes Schaltelement/erster FET
- 28: zweites Schaltelement/zweiter FET
- 30: Spannungsmesseinheit
- 32: Schütz-Steuereingänge
- 34: Schnellabschalteinheit
- 36: PWM-Signalerzeugungseinheit
- 38: Temperaturkompensationseinheit
- 40: Gleichspannungseingang

## Patentansprüche

1. Steuervorrichtung (10) für ein Schaltgerät mit getrennter Anzug- (14) und Haltespule (12) mit
- einer Steuerelektronik (16), die zum Ansteuern der Stromversorgung der Anzug-(14) und der Haltespule (12) eingerichtet ist;
und
- einer Gleichspannungsversorgungseinheit (18) zur Versorgung der Haltespule (12) und der Steuerelektronik (16) mit einer Gleichspannung mit gemeinsamem Bezugspotential für die Haltespule (12) und die Steuerelektronik (16);
**gekennzeichnet durch**
- einen Gleichrichter (22) zum Erzeugen einer gleichgerichteten Ausgangsspannung aus einer Wechselspannung zur Versorgung der Anzugspule (14); und
- einen am Ausgang des Gleichrichters (22) angeschlossenen Gleichspannungswandler (20) zum Erzeugen einer vorgegebenen Gleichspannung für die Gleichspannungsversorgungseinheit (18) aus der Ausgangsspannung des Gleichrichters (22).

2. Steuervorrichtung nach Anspruch 1, **dadurch gekennzeichnet, dass** die Gleichspannungsversorgungseinheit (18) ausgebildet ist, eine erste Gleichspannung zur Versorgung der Haltespule und eine zweite Gleichspannung zur Versorgung der Steuerelektronik zu erzeugen, wobei die erste und zweite Gleichspannung unterschiedlich sind.

3. Steuervorrichtung nach Anspruch 1 oder 2, **dadurch gekennzeichnet, dass** die Steuerelektronik (16) ausgebildet ist, während eines Haltevorgangs des Schaltgeräts die Haltespule mit einem weitgehend konstanten Gleichstrom zu versorgen.

4. Steuervorrichtung nach einem der Ansprüche 1 bis 3, **dadurch gekennzeichnet, dass** die Steuerelektronik (16) ausgebildet ist, während eines Anzugvorgangs des Schaltgeräts die Versorgung der Anzugspule zu steuern.

5. Steuervorrichtung nach einem der Ansprüche 1 bis 4, **dadurch gekennzeichnet, dass** die Steuerelektronik (16) ausgebildet ist, eine Schnellabschaltung der Gleichspannungsversorgung der Haltespule auszuführen.

6. Schaltgerät, insbesondere Schütz, mit
- einem Schaltantrieb, der eine Haltespule (12) und eine von dieser getrennte Anzugspule (14) aufweist,
- einer Steuervorrichtung (16, 18) nach einem der vorhergehenden Ansprüche zum Steuern der Stromversorgung der Anzug- und der Haltespule.

7. Schaltgerät nach Anspruch 6, **dadurch gekennzeichnet, dass** die Steuerelektronik (16) der Steuervorrichtung einen Mikroprozessor oder Mikrokontroller (17) aufweist, der durch ein in einem Speicher abgelegtes Programm derart konfiguriert ist, dass während eines Anzugvorgangs des Schaltantriebs die Anzugspule mit einer Puls-Weiten-Modulierten Spannung und daraus resultierendem Strom versorgt wird und während eines Haltevorgangs des Schaltantriebs die Haltespule mit einem weitgehend konstanten Gleichstrom versorgt wird.

## Claims

1. Control device (10) for a switching device having a separate closing coil (14) and holding coil (12) having
- control electronics (16) which are configured to control the current supply of the closing coil (14) and the holding coil (12);
and
- a direct current voltage supply unit (18) to supply the holding coil (12) and the control electronics (16) with a direct current voltage having a common reference potential for the holding coil (12) and the control electronics (16); **characterised by**
- a rectifier (22) to generate a rectified output voltage from an alternating current voltage to supply the closing coil (14); and
- a direct current voltage converter (20) connected to the output of the rectifier (22) to generate a predetermined direct current voltage for the direct current voltage supply unit (18) from the output voltage of the rectifier (22).

2. Control device according to Claim 1, **characterised in that** the direct current voltage supply unit (18) is formed to generate a first direct current voltage to supply the holding coil and a second direct current voltage to supply the control electronics, wherein the first and second direct current voltage are different.

3. Control device according to Claim 1 or 2, **characterised in that** the control electronics (16) are formed to supply the holding coil with a substantially constant direct current during a holding procedure of the switching device.

4. Control device according to any one of Claims 1 to 3, **characterised in that** the control electronics (16) are formed to control the supply of the closing coil during a closing procedure of the switching device.

5. Control device according to any one of Claims 1 to 4, **characterised in that** the control electronics (16) are formed to implement a fast shutdown of the direct current voltage supply of the holding coil.

6. Switching device, in particular contactor, having
- a switching drive which has a holding coil (12) and a closing coil (14) separate from this,
- a control device (16, 18) according to any one of the preceding claims to control the current supply of the closing and the holding coil.

7. Switching device according to Claim 6, **characterised in that** the control electronics (16) of the control device have a microprocessor or microcontroller (17) which is configured by a programme stored in a memory in such a way that during a closing procedure of the switching drive, the closing coil is supplied with a pulse-width-modulated voltage and current resulting therefrom and, during a holding procedure of the switching drive, the holding coil is supplied with a substantially constant direct current.

## Revendications

1. Dispositif de commande (10) pour un appareil de commutation avec bobine d'attraction (14) et bobine de maintien (12) séparées, avec
- une électronique de commande (16) qui est conçue pour commander l'alimentation en courant de la bobine d'attraction (14) et de la bobine de maintien (12) ;
et
- une unité d'alimentation en tension continue (18) pour alimenter la bobine de maintien (12) et l'électronique de commande (16) avec une tension continue avec un potentiel de référence commun pour la bobine de maintien (12) et pour l'électronique de commande (16) ;
**caractérisé par**
- un redresseur (22) pour produire une tension de sortie redressée à partir d'une tension alternative pour alimenter la bobine d'attraction (14) ;
et
- un transformateur de tension continue (20) raccordé à la sortie du redresseur (22) pour produire une tension continue prédéterminée pour l'unité d'alimentation en tension continue (18) à partir de la tension de sortie du redresseur (22).

2. Dispositif de commande selon la revendication 1, **caractérisé en ce que** l'unité d'alimentation en tension continue (18) est conçue pour produire une première tension continue pour alimenter la bobine de maintien et une deuxième tension continue pour alimenter l'électronique de commande, la première et la deuxième tension continue étant différentes.

3. Dispositif de commande selon la revendication 1 ou 2, **caractérisé en ce que** l'électronique de commande (16) est conçue pour, pendant une opération de maintien de l'appareil de commutation, alimenter la bobine de maintien avec un courant continu largement constant.

4. Dispositif de commande selon l'une des revendications 1 à 3, **caractérisé en ce que** l'électronique de commande (16) est conçue pour, pendant une opération d'attraction de l'appareil de commutation, commander l'alimentation de la bobine d'attraction.

5. Dispositif de commande selon l'une des revendications 1 à 4, **caractérisé en ce que** l'électronique de commande (16) est conçue pour réaliser une coupure rapide de l'alimentation en tension continue de la bobine de maintien.

6. Appareil de commutation, notamment contacteur, avec
- un mécanisme de commutation qui comporte une bobine de maintien (12) et une bobine d'attraction (14) séparée de la bobine de maintien,
- un dispositif de commande (16, 18) selon l'une des revendications précédentes pour commander l'alimentation en courant de la bobine d'attraction et de la bobine de maintien.

7. Appareil de commutation selon la revendication 6, **caractérisé en ce que** l'électronique de commande (16) du dispositif de commande comporte un microprocesseur ou microcontrôleur (17) qui est configuré de telle sorte par un programme enregistré dans une mémoire que, pendant une opération d'attraction du mécanisme de commutation, la bobine d'attraction est alimentée avec une tension modulée en largeur d'impulsion et avec un courant résultant de celle-ci et, pendant une opération de maintien du mécanisme de commutation, la bobine de maintien est alimentée avec un courant continu largement constant.
